# EUROPEAN PATENT APPLICATION

(11) **EP 4 414 740 A1**
(43) Date of publication of application: **14.08.2024**
(21) Application number: 23156332.1
(22) Date of filing: 13.02.2023
(51) Int. Cl.: G01S 7/41, G01S 13/931, G01S 13/42

(54) **RADAR TARGET CLASSIFICATION**

(71) Applicant: Aptiv Technologies AG, 8200 Schaffhausen (CH)
(72) Inventor: TALAI, Armin, 90431 Nürnberg (DE); LEONARDI, Roberto, 90403 Nürnberg (DE)
(74) Representative: Bardehle Pagenberg Partnerschaft mbB Patentanwälte Rechtsanwälte

(57) **Abstract**

The present invention relates to a method for classifying a radar target detected by a radar having a plurality of channels, the method comprising: determining the number of channels being involved in detecting the target; classifying the target as a true target if the number is above a predetermined number threshold, and otherwise classifying the target as a false target.

## Description

### Technical field

The present invention relates to the classification of radar targets as true or false targets, in particular for automotive applications.

### Technical background

Modern cars often comprise electromagnetic sensors that are for example part of advanced driver-assistance systems (ADAS) such as adaptive cruise control, lane change assistance, intersection assistance to name just a few examples. An example of such an electromagnetic sensor is a radar (radio detection and ranging) sensor which is used for detecting and locating objects such as cars, pedestrians, obstacles, etc. The radar sensor emits an electromagnetic signal, e.g. as a directed beam, with a specific frequency such as for example 77 GHz. The signal is reflected off a target and the reflected signal (sometimes called "echo") is received and detected by the radar sensor and further processed to cause corresponding actions.

In particular in automotive applications the radio waves emitted by the radar may not only be reflected by targets external to the car but also by structures of the car itself. For example, radio waves may be reflected by a bumper, fascia or exposed metal parts. The radio waves may bounce inside the vehicle and finally return to the radar sensor where they are detected as a target. Such targets are false, non-real or "ghost" targets as they are not caused by external objects but by the car itself. They are characterized by a zero Doppler shift, i.e. not moving relative to the car and by distances of usually a few meters, wherein hollow structures such as metal profiles may cause more than 50 multibounce reflections leading to an apparent larger distance of the target. In contrast, targets that are detected by the radar and that are in the regular field of view of the radar are considered as true or real targets. Usually, the signal path associated with such true targets is not subject to deflections or multibounce reflections.

Ghost targets may also appear if radio waves emitted by a radar are deflected by internal structures, escape the car, are reflected by an external target and received by the radar, possibly with additional internal deflections. Examples of such external ghost targets are guard rails and concrete walls which are outside of the regular field of view of the radar. Such ghost targets may be considered as external ghost targets.

False, non-real or ghost targets may appear sporadically and may impact the driving functions. A such, identification of and countermeasures against such false targets are safety relevant. What is therefore needed is a countermeasure against false targets.

### Summary of the Invention

This object is met by a method for classifying a radar target according to claim 1 and an apparatus for classifying a radar target according to claim 8.

The proposed method for classifying a radar target detected by a radar having a plurality of channels comprises: determining the number of channels being involved in detecting the target; classifying the target as a true target if the number is above a predetermined number threshold, and otherwise classifying the target as a false target.

According to the invention, a target is flagged as a false target if it is seen by just a small number of channels. If the target is seen by a large number of channels, it is assumed that it a true target. The inventors have realized that the signal paths associated with false targets involve a smaller number of channels as compared to true targets. This is in particular true for large aperture radars having an antenna spacing between the outermost antennas of ten wavelengths and more.

The radar may be configured for an automotive application. As outlined above, multibounce reflections resulting in false radar targets are particularly prevalent in vehicles. Therefore, the invention can be advantageously applied to automotive radars such as corner or front radars for example.

The method may further comprise classifying the target as a true target if the number is above a predetermined number threshold for at least a predetermined duration. For example, the predetermined duration may be ten cycles, more preferably 50 cycles and most preferably 100 cycles, wherein a cycle is an update rate of target detections with a duration of e.g. 50ms. Requiring that a candidate for a true target is present for at least a certain amount of time improves the accuracy of the classification and avoids classifying targets as true targets that are in fact false targets and vice versa.

The step of determining may comprise selecting channels having an amplitude above a predetermined amplitude threshold, wherein the amplitude is associated with the detected target. Thus, the channel may be considered to be involved in detecting a target if the channel amplitude associated with the target in the particular channel is above the predetermined amplitude threshold. The threshold is advantageously above the noise floor such that targets (true or false) can be separated from noise. Whether or not the target is a true or false target may then be determined by means of the method described herein.

The step of determining may comprise selecting channels having an amplitude larger by a predetermined factor than an amplitude in another channel, wherein the amplitudes are associated with the detected target. Thus, the channel may be considered to be involved in detecting the target if the channel amplitude associated with the target in the particular channel is larger by the predetermined factor than a channel amplitude associated with the target in another channel. In this way, only channels having a significant channel amplitude are considered to be involved in detecting a target. The other channel may be the channel with the smallest amplitude associated with the target. For example, a channel may be considered to be involved in detecting a target if its amplitude is twice the amplitude of the channel with the smallest signal amplitude. In another example, a channel may be considered to be involved in detecting a target if its amplitude is 5 dB above the amplitude of the channel with the smallest signal amplitude. In this way, small channel amplitudes which are due to noise are disregarded. At the same time, the distinction between signal and noise is robust as it is based on a relative comparison of signal amplitudes. For example, an increase of the noise floor level would affect all channels but it would not affect the relative amplitude ratios.

Generally, the amplitude difference between channels being involved in detecting a real target compared to channels being involved in detecting a non-real target may be e.g. 10dB difference, more preferred 13dB difference, most preferred 20dB difference.

The radar may be a Doppler radar and the target's Doppler shift may correspond to a speed relative to the radar of less than 1 m/s, preferably less than 0.5 m/s, more preferably less than 0.25 m/s. Such ranges would correspond to a static target, i.e. either an internal ghost target due to multibounce reflections inside a vehicle only or to an external ghost target due to reflections at guard rails or concrete walls which are outside of the regular field of view of the radar but which have a small or vanishing Doppler shift. Thus, the method according to the invention may consider only those targets that have a Doppler shift below a predetermined threshold. In this way, erroneously flagging true moving targets as false targets is avoided.

The number threshold may be 70%, preferably 50%, more preferably 30% of the number of channels in the plurality of channels. The inventors realized that those thresholds lead to a successful separation of true and false targets with high accuracy.

The radar may be a large aperture radar. For example, the spacing between the outermost antennas of the radar may be ten wavelengths or more. The separation of true and false targets is improved by a larger spacing of the antennas as only a small subset of the antennas is involved in detecting a false target whereas as true targets involve a larger number of antennas. Thus, the invention may advantageously be applied to large aperture radars having an antenna spacing between the outermost antennas of ten wavelengths or more.

The present invention is also directed to an apparatus for classifying a radar target detected by a radar having a plurality of channels. The apparatus comprises means for determining the number of channels being involved in detecting the target; means for classifying the target as a true target if the number is above a predetermined threshold, and for otherwise classifying the target as a false target.

As outlined with respect to the method according to the invention, a target is flagged as a false target if it is seen by just a small number of channels. If the target is seen by a large number of channels, it is assumed that it is a true target. The inventors have realized that the signal paths associated with false targets involve a smaller number of channels as compared to true targets. This is in particular true for large aperture radars having an antenna spacing of ten wavelengths and more between the outermost antennas.

The radar may be configured for an automotive application. As outlined above, multibounce reflections resulting in false radar targets are particularly prevalent in vehicles. Therefore, the invention can be advantageously applied to automotive radars such as corner or front radars for example.

The means for classifying the target as a true target may be adapted to classify the target as a true target if the number is above a predetermined number threshold for a predetermined duration. For example, the predetermined duration may be ten cycles, more preferably 50 cycles and most preferably 100 cycles, wherein a cycle is an update rate of target detections with a duration of e.g. 50ms. Requiring that a candidate for a true target is present for at least a certain amount of time improves the accuracy of the classification and avoids classifying targets as true targets that are in fact false targets and vice versa.

The means for determining may be adapted to select channels having an amplitude above a predetermined amplitude threshold, wherein the amplitude is associated with the detected target. Thus, the channel may be considered to be involved in detecting the target if the signal amplitude associated with the particular channel is above the predetermined amplitude threshold. The threshold is advantageously above the noise floor such that targets (true or false) can be separated from noise. Whether or not the target is a true or false target may then be determined by means of the apparatus described herein.

The means for determining may be adapted to select channels having an amplitude larger by a predetermined factor than a channel amplitude associated with the target in another channel, wherein the amplitudes are associated with the detected target. Thus, the channel may be considered to be involved in detecting the target if the channel amplitude associated with the target in the particular channel is larger by the predetermined factor than a channel amplitude associated with the target in another channel. Thus, only channels having a significant channel amplitude are considered to be involved in detecting a target. The other channel may be the channel with the smallest amplitude associated with the target. For example, a channel may be considered to be involved in detecting a target if its amplitude is twice the amplitude of the channel with the smallest signal amplitude. In another example, a channel may be considered to be involved in detecting a target if its amplitude is 5 dB above the amplitude of the channel with the smallest signal amplitude In this way, small channel amplitudes which are due to noise are disregarded. At the same time, the distinction between signal and noise is robust as it is based on a relative comparison of signal amplitudes. For example, an increase of the noise floor level would affect all channels but it would not affect the relative amplitude ratios.

The radar may be a Doppler radar and the target's Doppler shift may correspond to a speed relative to the radar of less than 1 m/s, preferably less than 0.5 m/s, more preferably less than 0.25 m/s. Such a range would correspond to a static target, i.e. either an internal ghost target due to multibounce reflections inside a vehicle only or to an external ghost target due to reflections at guard rails or concrete walls which are outside of the regular field of view of the radar but which have a small or vanishing Doppler shift. Thus, the apparatus according to the invention may consider only those targets that have a Doppler shift below a predetermined threshold. In this way, erroneously flagging true moving targets as false targets is avoided.

The number threshold may be 70%, preferably 50%, more preferably 30% of the number of channels in the plurality of channels. The inventors realized that those thresholds lead to a successful separation of true and false targets with high accuracy.

The radar may be a large aperture radar. For example, the spacing between the outermost antennas of the radar may be ten wavelengths or more. The separation of true and false targets is improved by a larger spacing of the antennas as only a small subset of the antennas is involved in detecting a false target whereas as true targets involve a larger number of antennas. Thus, the invention may advantageously be applied to large aperture radars.

The invention also relates to a vehicle comprising an apparatus for classifying a radar target as described herein.

The invention also relates to a computer program comprising instructions which, when executed by a computer, cause the computer to perform a method for classifying a radar target as described herein.

### Brief Description of the Drawings

Possible embodiments of the invention are described in more detail in the following detailed description with reference to the following figures.
- Fig. 1: illustrates how an internal ghost target may emerge in a vehicle-mounted radar;
- Fig. 2: illustrates how an external ghost target may emerge in a vehicle-mounted radar; and
- Fig. 3: illustrates an exemplary embodiment of a method according to the invention.

### Detailed Description of Possible Embodiments

For the sake of brevity, only a few embodiments will be described below. The person skilled in the art will recognize that the features described with reference to these specific embodiments may be modified and combined in different ways and that individual features may also be omitted. The general explanations in the sections above also apply to the more detailed explanations below.

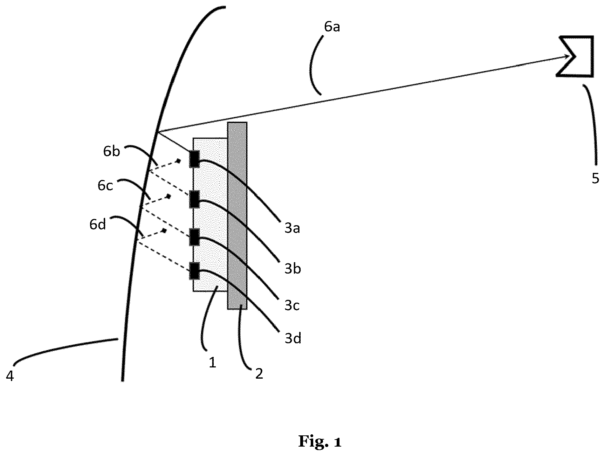

Fig. 1 illustrates how an internal ghost target may emerge in a vehicle-mounted radar 1, but ghost targets may generally be observed in other situations and application scenarios as well. The radar 1 is mounted to the vehicle by means of a bracket 2. Other means of mounting the radar 1 are possible. The radar 1 comprises a number of transmit and receive antennas 3a-3d. The number of four antennas serves just as an example and the present invention is not restricted to a particular number of antennas. Also, instead of combined transmit and receive antennas, the radar may have a plurality of separate transmit antennas and a plurality of separate receive antennas. The radar 1 in this example is a multiple input multiple output (MIMO) radar, i.e. due to the plurality of antennas multiple transmit-receive channels exist. For example, a radar signal emitted by one of the antennas 3a-3d may possibly be received by all antennas 3a-3d after being reflected off an object. This results in 16 (4×4) MIMO channels. The present invention is not restricted to MIMO radars but may also be applied to other types of radars.

A signal emitted by an antenna 3a-3d may not be reflected back to all of the antennas 3a-3d. In the example of Fig. 1, an obstacle 4 deflects the radar signals emitted by the antennas 3a-3d. The obstacle 4 may for example be a cover, emblem or bumper of the vehicle. The obstacle 4 results in four reflection paths 6a-6d. Reflection path 6a is a multibounce path, i.e. the corresponding radar wave is not only deflected by the obstacle 4 but also reflected by a vehicle component 5. Such a vehicle component 5 may for example be a bumper, a fascia or an exposed metal part within the vehicle. While reflection paths 6b-6d are rather short, they would not be considered as a real target outside of the vehicle. However, reflection path 6a has a significant length and could potentially be caused by an object outside of the vehicle. As reflection path 6a is received by just a single antenna 3a, the radar does not have any direction information associated with the reflection path, i.e. it is not possible to determine the position of the target. Without any countermeasures, reflection path 6a would thus cause the radar 1 to indicate a target outside of the vehicle. As the object 5 associated with the detected target is in fact inside of the vehicle, it is considered a false or ghost target. The present invention addresses the classification of such ghost targets.

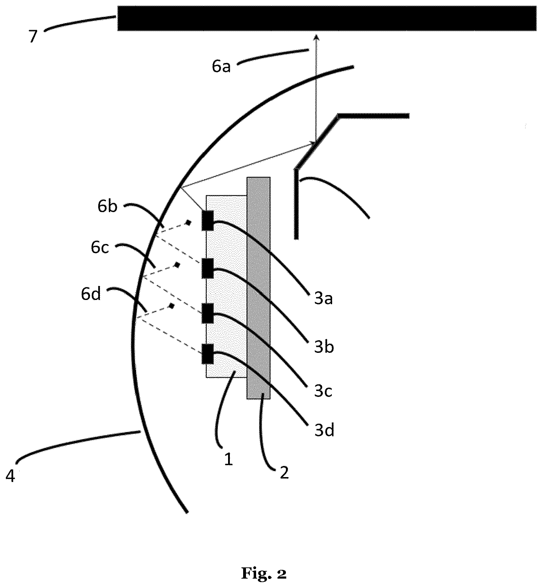

Fig. 2 illustrates how an external ghost target may emerge in a vehicle-mounted radar 1. The radar 1 is mounted to the vehicle similarly as in the example of Fig. 1, i.e. by means of a bracket 2. Also, the radar 1 itself is similar to the radar shown in the example of Fig. 1, i.e. having four transmit-receive antennas 3a-3d. Radar waves emitted by the antennas 3a-3d are deflected by an obstacle 4 which again could be a cover, emblem or bumper of the vehicle. Just like in the example of Fig. 1, as reflection paths 6b-6d are rather short, they would not be considered as a real target outside of the vehicle. This time, however, reflection path 6a leads to a vehicle component (e.g. a body in white such as the aluminum chassis of a car) 5 which deflects the corresponding radar waves such that they escape the vehicle and are reflected by an external obstacle 7. The external obstacle 7 could for example be a guard rail or concrete wall. The radar waves are reflected by the obstacle 7 and return to antenna 3a via the reflection path 6a.

As the relative speed between the external obstacle 7 and the vehicle is rather low (e.g. not exceeding 0.5 m/s), it would be detected by the radar 1 with a zero or essentially zero Doppler shift. In contrast, and again as in the example of Fig. 1, reflection paths 6b-6d are rather short and would not be associated with an external target. However, the target associated with reflection path 6a would be considered as a real target due to the comparably long path length. It is, however, outside of the regular field of view of the radar 1 and, thus, not a real target that would be of interest. Therefore, although the object 7 is outside of the vehicle, it is nevertheless a false or ghost target as it is caused by unwanted multibounce reflections inside of the vehicle.

The radar 1 shown in the examples of Figures 1 and 2 is a large aperture radar, i.e. the antennas are spaced apart 10 wavelengths or more. In general, the invention may also be applied to radars having a smaller antenna spacing. Also, the radar 1 in both examples could be a front or a corner radar but the invention is not limited to such types of radars.

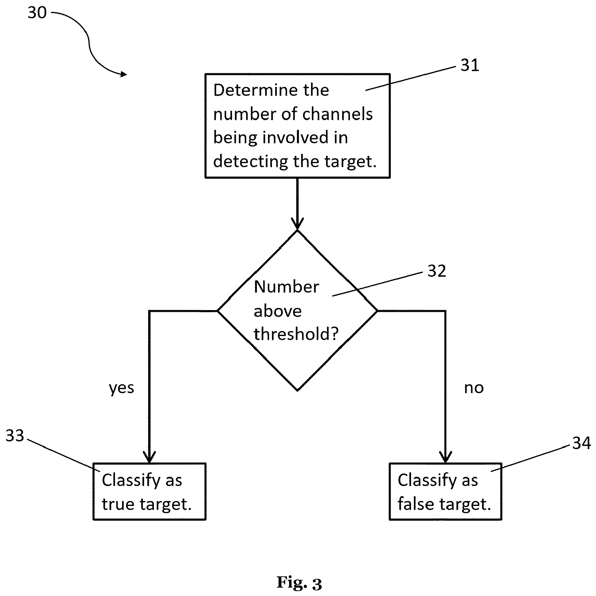

Fig. 3 illustrates an exemplary embodiment of a method 30 according to the invention for classifying a radar target detected by a radar, such as for example multiple input multiple output (MIMO) radar, having a plurality of transmit-receive channels. The method may for example be applied to classify a target as a ghost target such as the ghost targets in the examples of Figures 1 and 2 and the radar may a radar as described with respect to Figures 1 and 2.

The method 30 comprises a step 31 of determining the number of channels being involved in detecting the target. A channel can be considered as a pair of transmit-receive antennas, wherein the transmit antenna may be the same antenna as the receive antenna or both may be different antennas. A channel is considered to be involved in detecting the target if the signal amplitude is sufficiently large and contributes to the overall amplitude associated with the particular target. Thus, in step 31 the number of channels is determined that contribute some amplitude to the target. Only those channels may be counted that contribute a signal amplitude above a certain threshold. In another example, the signal amplitudes of all channels may be compared to the smallest signal amplitude and only those channels may count as being involved in detecting the target that are larger by at least a certain factor than the smallest signal amplitude or larger by at least a certain difference expressed for example in dB.

In step 32 the detected target is classified as either a true target or a false target. A true target is considered a target that is caused by an external object in the regular field of view of the radar and that is usually associated with a signal path without any internal reflections or deflections. A false target is a target as associated with the signal path 6a shown in the examples of Figures 1 and 2, i.e. an internal or external target with a small or vanishing Doppler shift.

In step 32 the detected target is classified as a true target if the number determined in step 31 is above a predetermined number threshold. For example, the radar may have a total of 16 MIMO channels, the number threshold may be ten and 14 of those channels may be involved in detecting the target. In this case the target may be classified as a true target in step 32. If, on the other hand, the number is not above the predetermined threshold, the target is classified as a false target. In the example above, if the number of channels being involved in detecting the target is just two, the target is classified as a false target.

Optionally, in step 32 the number of channels being involved in detecting the target is required to be above the predetermined number threshold for at least a predetermined duration. For example, the predetermined duration may be ten cycles, more preferably 50 cycles and most preferably 100 cycles, wherein a cycle is an update rate of target detections with a duration of e.g. 50ms.

The method 30 and a corresponding apparatus according to the present invention may be implemented in hardware or in software, or may be implemented partly in hardware and partly in software. Hardware suitable for implementing a method and an apparatus according to the present invention include a central processing unit (CPU), a microcontroller, a digital signal processor (DSP), an application-specific integrated circuit (ASIC) or the like. A (full or partial) software implementation may include compiling source code to obtain machine readable instructions which, when executed, cause a computer, CPU, DSP, microcontroller or the like to perform all or part of the method steps described above or to perform all or part of the functions of the means of an apparatus described above.

When the radar 1 is used in a vehicle, it may be mounted to the vehicle by means of means of a bracket 2 as described with respect to Figures 1 and 2.

## Claims

1. Method (30) for classifying a radar target detected by a radar having a plurality of channels, the method comprising:
determining (31) the number of channels being involved in detecting the target;
classifying (32) the target as a true target (33) if the number is above a predetermined number threshold, and otherwise classifying the target as a false target (34).

2. Method (30) of claim 1, further comprising classifying the target as a true target (33) if the number is above a predetermined number threshold for at least a predetermined duration.

3. Method (30) of one of claims 1 or 2, wherein the step of determining (32) comprises selecting channels having an amplitude above a predetermined amplitude threshold, wherein the amplitude is associated with the detected target.

4. Method (30) of one of claims 1-3, wherein the step of determining (32) comprises selecting channels having an amplitude larger by a predetermined factor than an amplitude in another channel, wherein the amplitudes are associated with the detected target.

5. Method (30) of one of claims 1-4, wherein the radar is a Doppler radar and the target's Doppler shift corresponds to a speed relative to the radar of less than 1 m/s, preferably less than 0.5 m/s, more preferably less than 0.25 m/s.

6. Method (30) of one of claims 1-5, wherein the number threshold is 70%, preferably 50%, more preferably 30% of the number of channels in the plurality of channels.

7. Method (30) of one of claims 1-6, wherein the radar is a large aperture radar.

8. Apparatus for classifying a radar target (5, 7) detected by a radar (1) having a plurality of channels, the apparatus comprising:
means for determining the number of channels being involved in detecting the target (5, 7);
means for classifying the target (5, 7) as a true target if the number is above a predetermined threshold, and for otherwise classifying the target (5, 7) as a false target.

9. Apparatus of claim 8, wherein the means for classifying the target (5, 7) as a true target is adapted to classify the target (5, 7) as a true target if the number is above a predetermined number threshold for at least a predetermined duration.

10. Apparatus of one of claims 8-9, wherein the means for determining is adapted to select channels having an amplitude above a predetermined amplitude threshold, wherein the amplitude is associated with the detected target (5, 7).

11. Apparatus of one of claims 8-10, wherein the means for determining is adapted to select channels having an amplitude larger by a predetermined factor than a channel amplitude associated with the target in another channel, wherein the amplitudes are associated with the detected target (5, 7).

12. Apparatus of one of claims 8-11, wherein the radar (1) is a Doppler radar and the target's (5, 7) Doppler shift corresponds to a speed relative to the radar of less than 1 m/s, preferably less than 0.5 m/s, more preferably less than 0.25 m/s.

13. Apparatus of one of claims 8-12, wherein the number threshold is 70%, preferably 50%, more preferably 30% of the number of channels in the plurality of channels.

14. Vehicle comprising an apparatus according to one of claims 8-13.

15. Computer program comprising instructions which, when executed by a computer, cause the computer to perform a method of one of claims 1-7.
